Europäisches Patentamt

European Patent Office

Office européen des brevets

Veröffentlichungsnummer: **0 282 777**

**A2**

# EUROPÄISCHE PATENTANMELDUNG

Anmeldenummer: 88102677.7

Int. Cl.4 **F23C 11/02 , B01J 8/38**

Anmeldetag: 24.02.88

Priorität: 18.03.87 DE 3708799

Veröffentlichungstag der Anmeldung:
**21.09.88 Patentblatt 88/38**

Benannte Vertragsstaaten:
**AT BE CH DE ES FR GB GR IT LI LU NL SE**

Anmelder: **L. & C. Steinmüller GmbH**
**Postfach 10 08 55/10 08 65 Fabrikstrasse 1**
**D-5270 Gummersbach 1(DE)**

Erfinder: **Croonenbrock, Raimund, Dr.**
**Hermann-Löns-Weg 16**
**D-5250 Engelskirchen(DE)**
Erfinder: **Müller, Horst**
**Danziger Strasse 20**
**D-5275 Bergneustadt 1(DE)**

Vertreter: **Carstens, Wilhelm, Dipl.-Phys.**
**L. & C. Steinmüller GmbH Patentabteilung**
**Postfach 10 08 55/10 08 65**
**D-5270 Gummersbach 1(DE)**

Verfahren zum Verbrennen von kohlenstoffhaltigem Material in einer Wirbelschichtfeuerung und Vorrichtung zur Durchführung des Verfahrens.

2.1 In einem Reaktor einer Wirbelschichtfeuerung, bei dem Wirbelschichtmaterial abgeschieden und in die Wirbelschicht zurückgeführt wird, und bei dem im Reaktor eine Teilmenge von Wirbelschichtmaterial aus einem Aufwärtsstrom von Wirbelschichtmaterial in einem Aufweitungsbereich in einem den Aufwärtsstrom umgebenden, getrennt geführten Abwärtsstrom und aus diesem wiederum in den Aufwärtsstrom überführt wird, ist aufgrund der Eigenschaften der Wirbelschicht sowohl eine Beeinflussung der Verbrennung von kohlenstoffhaltigem Material als auch die Abscheidung von Wirbelschichtmaterial erschwert. Das neue Verfahren und die Vorrichtung sollen die Verbrennungssteuerung hinsichtlich einer umweltbelastenden Schadstoffbildung erleichtern und die Abscheidung in apparativer Hinsicht vereinfachen.

2.2 Der das Wirbelschichtmaterial führende Aufwärtsstrom weist eine Suspensionsdichte $\rho_s$ von 15-100 Kg/m$^3$ auf, und es wird ihm mindestens eine Teilmenge des in Stufen zugeführten sauerstoffhaltigen Gases zugemischt, wobei der Aufwärtsstrom in einer Stufe durch tangentiale Gaszumischung verdrallt wird.

2.3 Hauptanwendungsgebiet ist eine Wirbelschichtfeuerung für einen Energieerzeugungsprozeß.

Fig. 1

# Verfahren zum Verbrennen von kohlenstoffhaltigem Material in einer Wirbelschichtfeuerung und Vorrichtung zur Durchführung des Verfahrens

Die Erfindung betrifft ein Verfahren zum Verbrennen von kohlenstoffhaltigen Materialien mit in Stufen zugeführtem sauerstoffhaltigem Gas in einem Wirbelschichtreaktor, bei dem Wirbelschichtmaterial abgeschieden und in die Wirbelschicht zurückgeführt wird, und bei dem im Wirbelschichtreaktor eine Teilmenge von Wirbelschichtmaterial aus einem Aufwärtsstrom von Wirbelschichtmaterial in einem Aufweitungsbereich in einen den Aufwärtsstrom umgebenden, getrennt geführten Abwärtsstrom und aus diesem wiederum in den Aufwärtsstrom überführt wird.

Ein derartiges Verfahren ist aus der US-Veröffentlichung EPA-650/2-73-048 a, "Evaluation of the Fluidized-Bed Combustion Process" von G. L. Keairns und anderen, US-Environmental Protection Agency, Washington, Dezember 1973, Seiten 314-316 bekannt.

Bei diesem Verfahren wird in einem mit einem Düsenboden in Verbindung mit einer Einrichtung zur gestuften Eindüsung eines sauerstoffhaltigen Gases und mit einer sprunghaften Querschnittserweiterung versehenen Wirbelschichtfeuerraum, wobei in dem zwischen dem Düsenboden und der Querschnittserweiterung befindlichen Feuerraumteil eine Trennwand den Feuerraumteil in einen zentralen und in einen den zentralen umschließenden Strömungskanal aufteilt, eine Wirbelschicht erzeugt, die sich über den gesamten unteren Wirbelschichtfeuerraumteil bis hinein in den oberen Feuerraumteil erstreckt. In dem oberen Feuerraumteil ist die Wirbelschicht aufgrund einer sprunghaften Dichteänderung von einem über der Wirbelschicht befindlichen Feuerraum begrenzt. Innerhalb der Wirbelschicht bildet sich eine interne Rezirkulationsströmung mit einem Aufwärtsstrom im zentralen Strömungskanal und einem Abwärtsstrom in dem den zentralen umschließenden Strömungskanal aus, bei der ständig eine Teilmenge von Wirbelschichtmaterial aus dem Aufwärtsstrom im Aufweitungsbereich an der Feuerraumquerschnittserweiterung in den Abwärtsstrom und aus diesem wieder in den Aufwärtsstrom überführt wird. Die restliche Teilmenge an Wirbelschichtmaterial wird aus der Wirbelschicht ausgetragen und verläßt mit dem Rauchgas über den Feuerraum den Wirbelschichtfeuerraum und wird in einer außerhalb des Feuerraumes befindlichen Einrichtung zur Feststoffabscheidung - beispielsweise in einem Zyklon -vom Rauchgas getrennt. Das in der Abscheideeinrichtung abgeschiedene Wirbelschichtmaterial wird wieder in den Wirbelschichtprozeß zurückgeführt. Entsprechend der Ausbildung des Düsenbodens wird das sauerstoffhaltige Gas in einer Querschnittsebene stufenweise in den Wirbelschichtprozeß eingebracht. Dabei wird es in einem Abschnitt des Düsenbodens als Primärgas zum Fluidisieren und Verbrennen von frisch eingebrachtem kohlenstoffhaltigem Material verwandt. Das in einem anderen Bereich des Düsenbodens eingebrachte Sekundärgas wird zum Einbringen von rückgeführtem Wirbelschichtmaterial wie auch zur Sicherstellung einer vollständigen Verbrennung herangezogen. In dem den zentralen Strömungskanal umgebenden Kanal sind Wärmetauschelemente angeordnet, durch die aus dem Abwärtsstrom der Rezirkulationsströmung Wärme abgeführt wird.

Zur Erzielung einer stationären Wirbelschicht ist die Feststoffbeladung relativ sehr hoch. Die Suspensionsdichte $\rho_s$ im fluidisierten Zustand beträgt in etwa 800-1000 kg/m³. Entsprechend dieser Dichte und der damit verbundenen geringen Fluidisierungsgeschwindigkeiten ergeben sich hohe Verweilzeiten für das Wirbelschichtmaterial in der Wirbelschicht mit der Folge, daß der Wirbelschichtfeuerraum entsprechend groß dimensioniert werden muß. Eine Beeinflussung der stationären Wirbelschicht im Hinblick auf eine verbesserte Vorabscheidung von Wirbelschichtmaterial im Rahmen der Rezirkulationsströmung in der Wirbelschicht und im Hinblick auf eine Verkleinerung der außerhalb des Wirbelschichtfeuerraumes befindlichen Feststoffabscheidung ist aufgrund der dichtebedingten Trägheit der Wirbelschicht kaum realisierbar. Die gestufte Luftzufuhr bei dem bekannten Verfahren erlaubt es nicht, gezielt die Verbrennung von kohlenstoffhaltigem Material hinsichtlich der Bildung von umweltbelastenden, mit dem Rauchgas aus dem Wirbelschichtprozeß ausgetragenen Schadstoffen zu beeinflussen.

Der Erfindung liegt daher die Aufgabe zugrunde, das bekannte Verfahren dahingehend zu verbessern, daß die Abscheidung von Wirbelschichtmaterial in apparativer Hinsicht vereinfacht und die Verbrennung von kohlenstoffhaltigem Material so gesteuert wird, daß der Gehalt an Schadstoffen, insbesondere jener an Stickstoffoxiden im Rauchgas, im Hinblick auf die gesetzlichen Bestimmungen vermindert wird.

Diese Aufgabe wird dadurch gelöst, daß der das Wirbelschichtmaterial führende Aufwärtsstrom eine Suspensionsdichte $\rho_s$ von 15-100 Kg/m³ aufweist, und daß dem Aufwärtsstrom mindestens eine Teilmenge des in Stufen in unterschiedlichen Ebenen zugeführten sauerstoffhaltigen Gases zugemischt wird, wobei der Aufwärtsstrom in einer Stufe durch tangentiale Gaszumischung verdrallt wird.

Die Verringerung der Suspensionsdichte im Aufwärtsstrom der Wirbelschicht auf ca. ein Zehntel des Wertes bei dem bekannten Verfahren verhindert die Bildung einer stationären Wirbelschicht. Durch den Aufweitungsbereich bei der sprunghaften Querschnittserweiterung des Wirbelschichtfeuerraumes wird die Geschwindigkeit des Aufwärtsstromes so weit herabgesetzt, daß eine Teilmenge des Wirbelschichtmateriales aus dem Aufwärtsstrom abgeschieden wird und in einem den Aufwärtsstrom umgebenden, getrennt geführten Abwärtsstrom und aus diesem wiederum in den Aufwärtsstrom überführt wird. was dem Prinzip einer zirkulierenden Wirbelschicht entspricht. Durch diese Maßnahmen aber wird die Verbrennung von kohlenstoffhaltigem Material örtlich auf den Bereich des Aufwärtsstromes beschränkt. Durch Zumischen einer Teilmenge von in Stufen zugeführtem sauerstoffhaltigem Gas in diesen Aufwärtsstrom läßt sich die Verbrennung des kohlenstoffhaltigen Materiales derart beeinflussen, daß sich entlang des Strömungsweges des Aufwärtsstromes gezielt Verbrennungszonen mit unterschiedlich definierten Atmosphären ausbilden. Auf diese Weise läßt sich die Bildung von Schadstoffen, insbesondere von Stickstoffoxiden, in der Wirbelschichtfeuerung so weit herabmindern, daß nur noch eine ganz geringe Menge an Schadstoffen, die weit unterhalb der vom Gesetz vorgeschriebenen Grenzwerte liegt, mit dem Rauchgas in die Umwelt eingebracht wird. Dadurch, daß dem Auffwärtsstrom in einer Stufe sauerstoffhaltiges Gas tangential zugemischt und so der Aufwärtsstrom verdrallt wird, läßt sich die im Aufweitungsbereich abgeschiedene Menge an Wirbelschichtmaterial erhöhen. Dabei wird durch die Rotation des Aufwärtsstromes Wirbelschichtmaterial im Aufweitungsbereich unter dem Einfluß von Zentrifugalkräften nach außen an die Wand des oberen Feuerraumteiles getragen, verliert seinen Bewegungsimpuls in Strömungsrichtung und sinkt der Schwerkraft folgend nach unten. Dieses Wirbelschichtmaterial wird zusammen mit dem Material, das durch die Geschwindigkeitsverminderung im Aufweitungsbereich abgeschieden worden ist, mit dem Abwärtsstrom wieder dem Aufwärtsstrom und somit dem darin ablaufenden Verbrennungsprozeß zugeführt. Durch diese Maßnahmen wird ein so großer Anteil an Wirbelschichtmaterial zurückgeführt, daß auf eine außerhalb des Feuerraumes befindliche Feststoffabscheidung verzichtet werden kann.

Hierzu ist es zweckmäßig, daß die tangentiale Gaszumischung am oberen Ende Aufwärtsstromes im Aufweitungsbereich vorgenommen wird.

Diese Maßnahme stellt sicher, daß die Verdrallung des Aufwärtsstromes unter minimalem Energieaufwand für eine maximale Feststoffabscheidung vorgenommen wird.

Die Erfindung richtet sich auch auf eine Vorrichtung zur Durchführung des Verfahrens mit einem mit einem Düsenboden in Verbindung mit einer Einrichtung zur gestuften Eindüsung eines sauerstoffhaltigen Gases und einer sprunghaften Querschnittserweiterung versehenen Wirbelschichtfeuerraum und mit einer Einrichtung zur Feststoffabscheidung, wobei in den zwischen dem Düsenboden und der Querschnittserweiterung befindlichen Feuerraumteil eine Trennwand den Feuerraumteil in einen zentralen und in einen den zentralen umschließenden Strömungskanal aufteilt. Um die bekannte Vorrichtung bei unveränderter Leistung kleiner dimensionieren zu können, wird vorgeschlagen, daß mindestens ein teil der Einrichtung zur gestuften Eindüsung eines sauerstoffhaltigen Gases an der Trennwand angeordnet ist. und daß eine Stufe des Teiles der Einrichtung zur gestuften Eindüsung eine tangentiale in den zentralen Strömungskanal gerichtete Einströmrichtung aufweist.

Durch die verfahrensbedingte Ausbildung einer zirkulierenden Wirbelschicht innerhalb eines Feuerraumes eines im Querschnitt sich erweiternden Wirbelschichtreaktors wird bei konstanter Verweilzeit des zu verbrennenden, kohlenstoffhaltigen Materiales in der Wirbelschicht die Höhe des Feuerraumes verkürzt. Dadurch läßt sich die Vorrichtung in ihrer Größe auf ein wirtschaftlich vertretbares Ausmaß verkleinern. Durch die Anordnung eines Teiles der Einrichtung zur gestuften Eindüsung in Verbindung mit einer tangentialen Gaszumischung kann innerhalb des Feuerraumes soviel Wirbelschichtmaterial rückgeführt werden, daß überdies auf die Einrichtung zur Feststoffabscheidung außerhalb des Feuerraumes verzichtet werden kann.

Im Hinblick auf die Feststoffabscheidung innerhalb des Feuerraumes ist es zweckmäßig, wenn die Stufe mit der tangentialen Einströmrichtung am oberen Ende der Trennwand angeordnet ist.

Durch diese Anordnung der Einrichtung für eine Verdrallung des Aufwärtsstromes läßt sich die Feststoffabscheidung innerhalb des Wirbelschichtfeuerraumes noch weiter steigern, womit in vorteilhafter Weise auch eine verminderte Belastung einer der Vorrichtung nachgeschalteten Feststoffeinabscheidung verbunden ist.

Da sämtliche Teile der Vorrichtung, insbesondere die Trennwand und die Einrichtung zur gestuften Eindüsung im Bereich des Wirbelschichtfeuerraumes thermisch stark belastet sind, ist es zweckmäßig, wenn der Teil der Einrichtung zur gestuften Eindüsung in die Trennwand integriert ist.

Die Integration der Eindüsungseinrichtung in die Trennwand kann unter unterschiedlichen Gesichtspunkten vorgenommen werden. So bietet sich beispielsweise die Integration dann an, wenn die Trennwand in Form einer Flossenrohrwand durch ein Kühlmedium gekühlt wird, und die Eindüsungseinrichtung gleichfalls in die Trennwandkühlung einbezogen werden kann. Andererseits besteht aber auch die Möglichkeit, daß das sauerstoffhaltige Medium, das über einen an die Trennwand angrenzenden Versorgungskasten zugeführt wird, gleichzeitig zur Trennwandkühlung herangezogen wird.

Um gleichmäßige Strömungsbedingungen im Aufwärtsstrom aufrechtzuerhalten, ist es zweckmäßig, wenn der Strömungsquerschnitt des von der Trennwand begrenzten zentralen Strömungskanales von unten nach oben zunimmt.

Durch die Zunahme des Strömungsquerschnittes in Strömungsrichtung des Aufwärtsstromes ändert sich dessen Geschwindigkeit nur in einem relativ engen Geschwindigkeitsbereich.

Zur Unterstützung einer Rückführung des oberhalb der Trennwand aus dem Aufwärtsstrom ausgetragenen Wirbelschichtmateriales ist es ferner zweckmäßig, wenn der Strömungsquerschnitt des die Trennwand umgebenden Strömungskanales von oben nach unten abnimmt.

Durch die Abnahme des Strömungsquerschnittes für den äußeren Strömungskanal bilden sich geneigte Wandflächen aus, über die das rückzuführende Wirbelschichtmaterial leichter dem Aufwärtsstrom im zentralen Strömungskanal zugeführt werden kann.

Die Verdrallung des Aufwärtsstromes kann nur teilweise für eine Feststoffabscheidung genutzt werden. Für eine vollständige Nutzung ist es zweckmäßig, wenn im Bereich der Feuerraumaustrittsöffnung im Feuerraum eine Feststoffeinabscheidung angeordnet ist.

Durch eine Anordnung einer Feststoffeinabscheidung im Bereich des Wirbelschichtfeuerraumes wird gegebenenfalls nicht nur eine außerhalb der Vorrichtung befindliche Einrichtung zur Feinabscheidung entbehrlich, es entfallen auch die zugehörigen Verbindungsleitungen bzw. -kanäle.

Als Einrichtung zur Feststoffeinabscheidung kann beispielsweise ein mechanisches Filter oder ein Wirbelabscheider herangezogen werden.

Besonders zweckmäßig ist es, wenn die Feststoffeinabscheidung aus ringförmig zwischen der Feuerraumaustrittsöffnung und einer diese abdeckenden Prallplatte angeordneten Abscheideelementen besteht.

Eine ringförmige Anordnung von Abscheideelementen beispielsweise in Form von vertikalen Fangrinnen für eine Feststoffeinabscheidung ist an eine mit Drall behaftete, noch mit Wirbelschichtfeinmaterial beladene und in die Feuerraumaustrittsöffnung einströmende Rauchgasströmung angepaßt und stellt so sicher, daß die Strömungsenergie für die Feststoffeinabscheidung optimal genutzt wird.

Das Verfahren wird nachfolgend anhand einer in den beiliegenden Figuren dargestellten Vorrichtung näher erläutert. Es zeigen

Fig.1 einen Längsschnitt durch einen Wirbelschichtreaktor,

Fig.2 eine Ansicht entlang der Linie II-II der in Fig.1 dargestellten Vorrichtung mit rundem Querschnitt und

Fig.3 eine zur Fig.2 analoge Ansicht mit rechteckigem bzw. quadratischem Querschnitt.

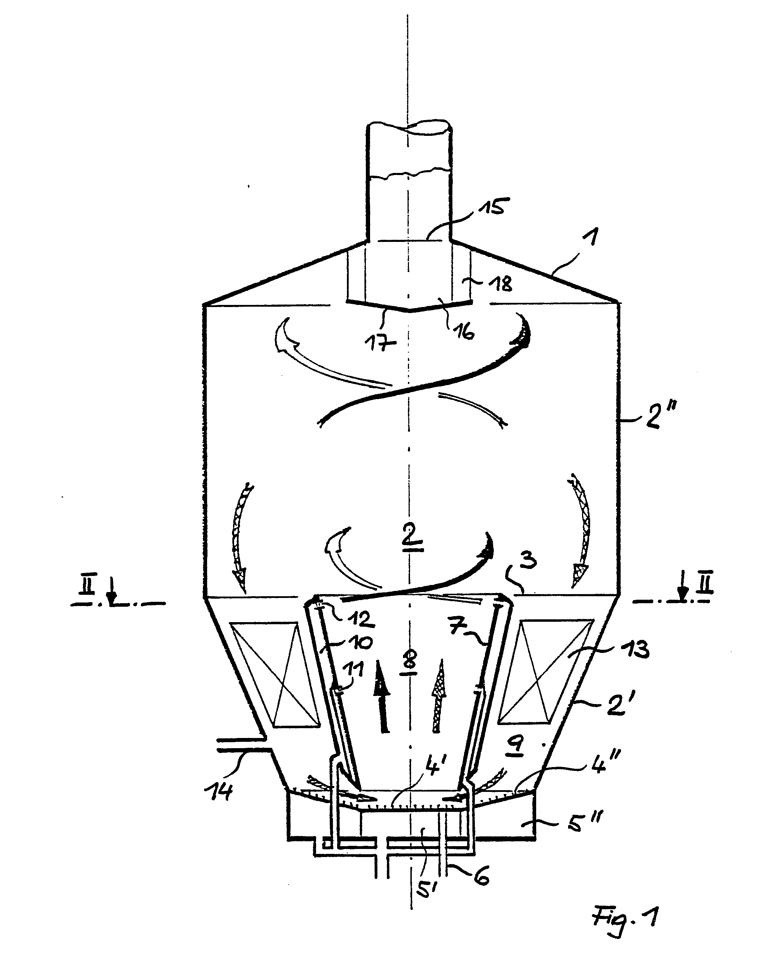

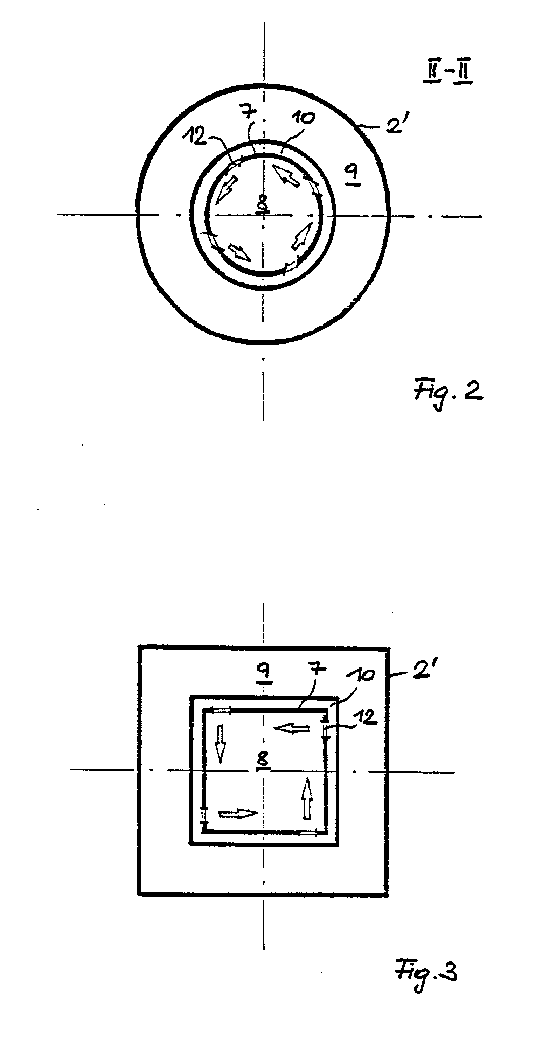

Gemäß Fig.1 wird ein in einem Wirbelschichtreaktor (1) befindlicher Feuerraum (2) von einer durch Einbauten hervorgerufenen Querschnittserweiterung (3) in zwei Raumteile (2', 2") aufgeteilt, wobei der Querschnitt des oberhalb der Querschnittserweiterung (3) befindlichen Raumteiles (2") größer ist als der mittlere Querschnitt des nach unten anschließenden Raumteiles (2'). Der untere Feuerraum (2') besitzt einen Düsenboden mit einer zentralen Zone (4') und einer die zentrale Zone (4') umschließenden, nach innen geneigten Zone (4"), der in Verbindung mit einer Einrichtung zur gestuften Eindüsung (5', 5") von sauerstoffhaltigen Gasen steht und ebenso eine Einrichtung (6) zum Abzug von Brennstoffasche aufweist. Zwischen der Querschnittserweiterung (3) und dem Düsenboden (4', 4") befindet sich als eine der Einbauten eine Trennwand (7), die den unteren Feuerraumteil (2') in vertikaler Richtung in einen zentralen Strömungskanal (8) und in einen den Zentralen Kanal (8) umgebenden Strömungskanal (9) aufteilt. Die Querschnitte der beiden Kanäle (8) und (9) nehmen von unten nach oben zu, so daß sich der zentrale Strömungskanal (8) nach oben hin trichterförmig öffnet, während sich der andere Strömungskanal (9) konisch nach unten verjüngt. Die Verjüngung des Strömungskanales (9) hat zur Folge, daß die äußere den Kanal begrenzende Wand bis zur äußeren Düsenbodenzone (4") geneigt ist. In der Trennwand (7), in die ein die Trennwand (7) umhüllender Gasversorgungskasten (10) integriert ist, befinden sich in zwei unterschiedlichen Höhen über dem zentralen Düsenboden (4') ein Teil der Einrichtungen (11, 12) zum Eindüsen einer Teilmenge des in Stufen zugeführten sauerstoffhaltigen Gases, wobei die oberste Eindüseinrichtung (12) am oberen Ende der Trennwandd (7) im Bereich der sprunghaften Querschnittserweiterung (3) angeordnet ist und gemäß Fig.2 oder Fig.3 eine tangentiale, in den zentralen Strömungskanal (8) gerichtete Einströmrichtung aufweist. In dem den zentralen Kanal (8) umgebenden Strömungskanal (9) sind Wärmetauschelemente (13) angeordnet. Im mittleren Bereich des äußeren Strömungskanales (9) befindet sich eine Einrichtung (14) zum Einbringen von kohlenstoffhaltigem Material. Im oberhalb der Querschnittserweiterung (3) befindlichen Feuerraumteil (2") befinden sich an der Feuerraumaustrittsöffnung (15) eine Einrichtung (16) zur Feststoffeinabscheidung, die aus einer die Austrittsöffnung (15) abdeckenden Prallplatte (17) und aus zwischen dieser (17) und der Wandbegrenzung der Austrittsöffnung ringförmig angeordneten Abscheideelementen (18) besteht.

Das über die Einrichtung (14) eingebrachte kohlenstoffhaltige Material mit einer Körnung von 150 bis 200 um gelangt unterstützt durch das über die äußere Düsenbodenzone (4") eingebrachte sauerstoffhaltige Transportmedium in den Bereich der zentralen Düsenbodenzone (4'), wo es durch eine Primärgasmenge eines sauerstoffhaltigen Gases fluidisiert und in einer ersten Verbrennungsstufe, vorzugsweise unterstöchiometrisch verbrannt wird. Ein sich dabei ausbildender heißer Feststoffgasstrom strömt im zentralen Strömungskanal (8) mit einer Geschwindigkeit von ca. 3-20 m/s vorzugsweise von 4-7 m/s aufwärts und besitzt eine Suspensionsdichte $\rho_s$ von 15-100 Kg/m³. Diesem Aufwärtsstrom werden über die Eindüseinrichtungen (11, 12) stufenweise unabhängig voneinander weitere Mengen von sauerstoffhaltigem Gas zugemischt, wodurch sich weitere Verbrennungszonen bis hin zu einer überstöchiometrischen Verbrennung ausbilden, durch die gezielt auf die Bildung von umweltbelastenden Schadstoffen, insbesondere von Stickstoffoxiden, Einfluß genommen wird. Durch eine tangentiale, in den zentralen Strömungskanal (8) gerichtete Eindüsung von sauerstoffhaltigem Gas an der über der zentralen Düsenbodenzone (4') obersten Eindüseinrichtung (12) wird der Aufwärtsstrom im Aufweitungsbereich der sprunghaften Querschnittserweiterung (3) verdrallt. Der nunmehr verdrallte Aufwärtsstrom tritt in den oberen Feuerraum (2") ein, wodurch sich aufgrund der sprunghaften Querschnittserweiterung (3) die axiale Geschwindigkeitskomponente des Aufwärtsstromes auf ca. 0,8-1,5 m/s verringert. Dabei kommt es zu einem Austrag einer größeren Menge des im Aufwärtsstrom mitgeführten Wirbelschichtmateriales, wobei die Verdrallung des Aufwärtsstromes dahin unterstützend wirkt, daß die mitgeführten Partikel unter dem Einfluß von Zentrifugalkräften nach außen, d.h. aus dem Aufwärtsstrom getragen werden. Dieses ausgetragene Wirbelschichtmaterial fällt aufgrund der sich im Feuerraum (2) ausbildenden Strömungsverhältnisse in den den zentralen Kanal (8) umgebenden Strömungskanal (9), sinkt in Form eines Abwärtsstromes von den geneigten Wänden der äußeren Kanalbegrenzung geführt nach unten und wird über diesen Weg wieder teilweise dem Aufwärtsstrom und der im zentralen Strömungskanal (8) stattfindenden Verbrennung zugeführt. Eine andere Teilmenge dieses rückgeführten Wirbelschichtmateriales wird im Bereich des Düsenbodens (4', 4") über die Entaschungseinrichtung (6) als Brennstoffasche aus dem unteren Feuerraumteil (2') ausgetragen. Eine Kontrolle der Temperatur im Wirbelschichtfeuerraum (2) erfolgt durch Wärmeentzug an den Feuerraumbegrenzungswänden, vorzugsweise an Membranwänden in Steg-Rohr-Steg-Konstruktion, und an den Wärmetauscherelementen (13) im den zentralen Kanal (8) umgebenden Strömungskanal (9), wobei das in den Aufwärtsstrom eingebrachte, rückgeführte Wirbelschichtmaterial gekühlt wird. Der im oberen Feuerraumteil (2') vom Wirbelschichtmaterial größtenteils befreite rotierende Gasstrom strebt der Austrittsöffnung (15) zu, wo er im Austrittsbereich die Einrichtung (16) zur Feststoffeinabscheidung über die ringförmig angeordneten Abscheideelemente (18), beispielsweise in Form vertikaler Fangrinnen, durchströmt. Dabei wird der im Gasstrom verbliebene Feinkornanteil des Wirbelschichtmateriales an den Abscheideelementen vom Gasstrom weitestgehend getrennt, fällt im Innenbereich des verdrallten aufwärts gerichteten Gasstromes in den oberen Feuerraumteil (2') zurück und wird letztlich zusammen mit einer Teilmenge des zirkulierenden Wirbelschichtmaterialstromes als Brennstoffasche durch die Abzugseinrichtung (6) aus dem Wirbelschichtreaktor (1) ausgetragen.

## Ansprüche

1. Verfahren zum Verbrennen von kohlenstoffhaltigem Material mit in Stufen zugeführtem sauerstoffhaltigem Gas in einem Wirbelschichtreaktor, bei dem Wirbelschichtmaterial abgeschieden und in die Wirbelschicht zurückgeführt wird, und bei dem im Wirbelschichtreaktor eine Teilmenge von Wirbelschichtmaterial aus einem Aufwärtsstrom von Wirbelschichtmaterial in einem Aufweitungsbereich in einen den Aufwärtsstrom umgebenden, getrennt geführten Abwärtsstrom und aus diesem wiederum in den Aufwärtsstrom überführt wird, **dadurch gekennzeichnet,** daß der das Wirbelschichtmaterial führende Aufwärtsstrom eine Suspensionsdichte $\rho_s$ von 15-100 Kg/m³ aufweist, und daß dem Aufwärtsstrom mindestens eine Teilmenge des in Stufen zugeführten sauerstoffhaltigen Gases zugemischt wird, wobei der Aufwärtsstrom in einer Stufe durch tangentiale Gaszumischung verdrallt wird.

2. Verfahren nach Anspruch 1, **dadurch gekennzeichnet,** daß die tangentiale Gaszumischung am oberen Ende des Aufwärtsstromes im Aufweitungsbereich vorgenommen wird.

3. Vorrichtung zur Durchführung des Verfahrens nach Anspruch 1 oder 2 mit einem Düsenboden in Verbindung mit einer Einrichtung zur gestuften Eindüsung eines sauerstoffhaltigen Gases und mit einer sprunghaften Querschnittserweiterung versehenen Wirbelschichtfeuerraum und mit einer Einrichtung zur Feststoffabscheidung, wobei in dem zwischen dem Düsenboden und der Querschnittserweiterung befindlichen Feuerraumteil eine Trennwand den Feuerraumteil in einen zentralen und einen den zentralen umschließenden Strömungskanal aufteilt, **dadurch gekennzeichnet,** daß mindestens ein Teil der Einrichtung (11, 12) zur gestuften Eindüsung eines sauerstoffhaltigen Gases an der Trennwand (7) angeordnet ist, und daß eine Stufe (12) des Teiles der Einrichtung (11, 12) zur gestuften Eindüsung eine tangentiale, in den zentralen Strömungskanal (8) gerichtete Einströmrichtung aufweist.

4. Vorrichtung nach Anspruch 3, **dadurch gekennzeichnet,** daß die Stufe (12) mit der tangentialen Einströmrichtung am oberen Ende der Trennwand (7) angeordnet ist.

5. Vorrichtung nach Anspruch 3 oder 4, **dadurch gekennzeichnet,** daß der Teil der Einrichtung (11, 12) zur gestuften Eindüsung in die Trennwand (7) integriert ist.

6. Vorrichtung nach einem der Ansprüche 3 bis 5, **dadurch gekennzeichnet,** daß der Strömungsquerschnitt des von der Trennwand (7) begrenzten, zentralen Strömungskanales von unten nach oben zunimmt.

7. Vorrichtung nach einem der Ansprüche 3 bis 6, **dadurch gekennzeichnet,** daß der Strömungsquerschnitt des die Trennwand (7) umgebenden Strömungskanales (9) von oben nach unten abnimmt.

8. Vorrichtung nach einem der Ansprüche 3 bis 7, **dadurch gekennzeichnet,** daß im Bereich der Feuerraumaustrittsöffnung (15) im Feuerraum eine Einrichtung (16) zur Feststoffeinabscheidung angeordnet ist.

9. Vorrichtung nach Anspruch 8, **dadurch gekennzeichnet,** daß die Einrichtung (16) zur Feststoffeinabscheidung aus ringförmig, zwischen der Wandung der Feuerraumaustrittsöffnung (15) und einer diese abdeckenden Prallplatte (17) angeordneten Abscheideelementen (18) besteht.

Fig. 1

II-II

Fig. 2

Fig.3